# FASCICULE DE BREVET EUROPEEN

(11) **EP 0 600 763 B1**
(45) Date de publication et mention de la délivrance du brevet: **05.03.1997**
(21) Numéro de dépôt: 93402799.6
(22) Date de dépôt: 17.11.1993
(51) Int. Cl.: B60T 7/08

(54) **Frein de parc pour véhicule automobile à faible effort de serrage**
Kraftfahrzeug-Feststellbremse mit geringem Kraftbedarf zum Anlegen
Parking brake requiring low application effort for a motor vehicle

(30) Priorité: 03.12.1992 FR 9214573
(43) Date de publication de la demande: 08.06.1994
(73) Titulaire: ROCKWELL BODY AND CHASSIS SYSTEMS - FRANCE, en abrégé: ROCKWELL BCS - FRANCE, 92082 Paris La Défense 2 (FR)
(72) Inventeur: Belmond, Jean-Marc, F-88100 Nayemont-les-Fosses (FR)
(74) Mandataire: Martin, Jean-Paul

(56) Documents cités:
- AU-B- 2 844 771
- DD-A- 301 478
- GB-A- 1 580 005

## Description

La présente invention a pour objet un frein à main pour véhicule, du type comprenant un levier articulé sur une semelle, relié à un câble de transmission d'effort de serrage, et des moyens de maintien et de verrouillage du levier dans une position angulaire de serrage déterminée. Un frein de ce type est décrit par le document AU-B 28,44771.

On sait que les freins à main de parc pour véhicule utilisés actuellement comportent généralement des systèmes à cliquets et secteurs dentés. L'ergonomie de la commande de ces freins de parc est relativement peu satisfaisante, car l'effort qui doit être développé au levier est de l'ordre de 35 à 40 daN pour obtenir la tension adéquate dans le câble de serrage.

Le desserrage du frein nécessite de plus un effort de soulagement supplémentaire de la part de l'utilisateur.

L'invention a pour but de réaliser un frein de parc dont la commande pour placer le levier dans la position de serrage nécessite un effort inférieur à ceux exigés jusqu'à présent, et dont le desserrage puisse être obtenu sans effort de soulagement supplémentaire.

Conformément à l'invention, les moyens de maintien et de verrouillage précités comprennent un mécanisme à genouillère lié d'une part à l'extrémité articulée du levier, et d'autre part au câble de transmission d'effort.

Suivant un mode de réalisation de l'invention, le mécanisme à genouillère comporte un bras solidaire de l'extrémité du levier articulé sur la semelle, et une bielle articulée sur le bras et fixée à l'extrémité du câble de transmission d'effort, laquelle est liée à un palonnier déplaçable en translation à l'intérieur de la semelle.

Un tel système d'articulation permet de manoeuvrer le frein avec un effort largement inférieur à ceux nécessaires jusqu'à présent.

La mise en tension du câble provoque un effort dans la bielle dont la direction en fin de serrage est telle qu'elle passe au-delà de l'axe d'articulation du levier dans la semelle, la position de fin de serrage étant obtenue en mettant le levier en butée sur la semelle.

Suivant une autre caractéristique de l'invention, lesdits moyens de maintien et de verrouillage du levier comprennent un poussoir déplaçable en translation à l'intérieur du levier, dont une première extrémité fait saillie d'une poignée de préhension du levier et dont la seconde extrémité est munie d'ergots latéraux engagés dans des lumières oblongues ménagées dans des parois latérales du levier, et la semelle comporte des parois s'étendant de chaque côté de l'extrémité articulée du levier et dans lesquelles sont agencés des profils de cames sur lesquels les ergots s'appuient et peuvent glisser durant les manoeuvres du levier, ces profils de cames comportant un premier dégagement dans lequel sont engagés les ergots lorsque le levier est en position basse desserrée, et un second dégagement dans lequel sont introduits les ergots lorsque le levier est en position haute serrée, des moyens étant en outre prévus pour rappeler élastiquement le poussoir dans sa position initiale et maintenir les ergots au fond de l'un ou l'autre des dégagements de la came.

D'autres particularités et avantages de l'invention apparaîtront au cours de la description qui va suivre, faite en référence aux dessins annexés qui en illustrent deux formes de réalisation à titre d'exemples non limitatifs.

La figure 1 est une vue en coupe longitudinale d'une première forme de réalisation du frein à main selon l'invention, en position desserrée avec le levier abaissé.

La figure 2 est une vue en coupe transversale suivant 2/2 de la Fig.1.

La figure 3 est une vue en coupe transversale suivant 3/3 de la Fig.1.

La figure 4 est une vue analogue à la Fig.1 montrant le frein en position serrée avec le levier relevé.

La figure 5 est une vue en perspective avec arrachement partiel de la semelle du frein des Fig.1 à 4.

La figure 6 est une vue mi-coupe longitudinale mi-élévation d'une seconde forme de réalisation du frein selon l'invention, en position desserrée avec le levier abaissé.

La figure 7 est une vue en coupe transversale suivant 7/7 de la Fig.6.

La figure 8 est une vue en coupe longitudinale suivant 8/8 de la Fig.7.

La figure 9 est une vue analogue à la Fig.6 montrant le frein en position serrée avec le levier relevé.

La figure 10 est une vue en coupe transversale partielle du levier suivant la direction 10 de la Fig.9.

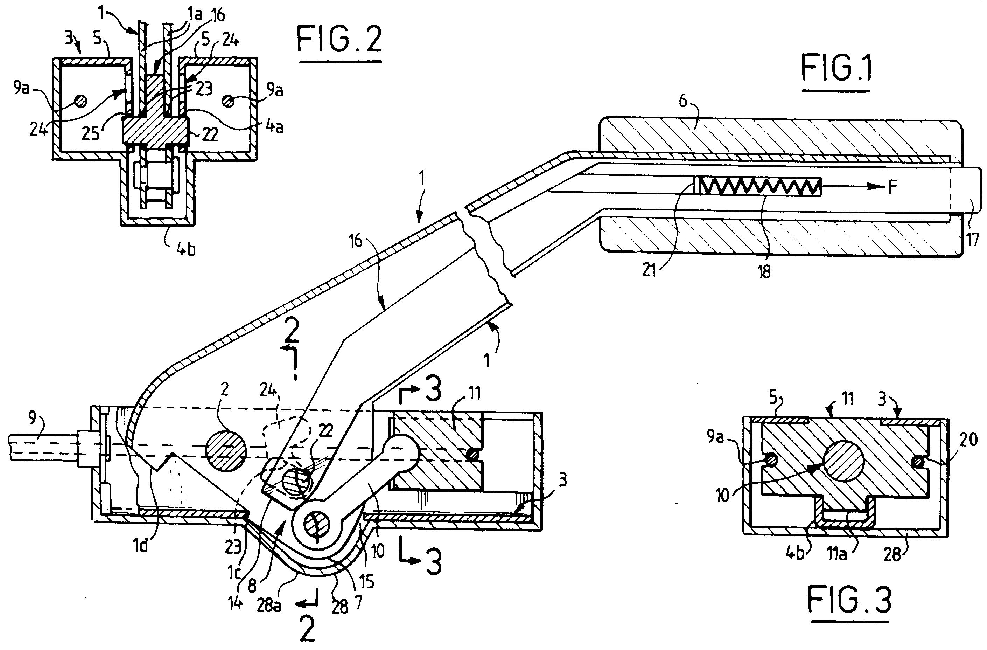

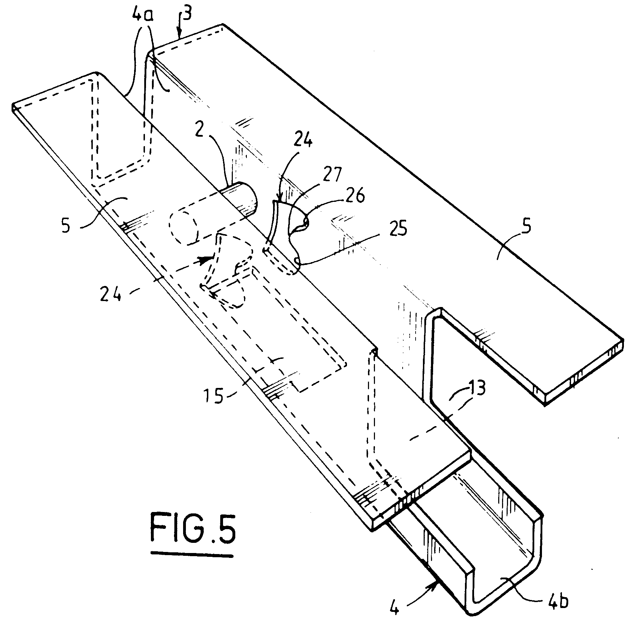

Le frein de parc pour véhicule automobile représenté aux Fig.1 à 5 comprend un levier tubulaire 1, articulé sur une de ses extrémités autour d'un axe transversal 2 d'une semelle 3 de support. Cette semelle 3 est constituée (Fig.5) d'un profilé longitudinal 4 en U (Fig.5) ouvert vers le haut c'est-à-dire vers le levier 1 et dont les parois 4a portent l'axe 2, et d'ailes longitudinales 5 prolongeant à angle droit les parois 4a du profilé 4.

Le levier 1 comporte, à son extrémité opposée à l'axe d'articulation 2, une poignée terminale 6 de préhension manuelle, formant un angle obtus avec le reste du levier 1. Du côté de son extrémité articulée, ce dernier présente la forme d'un bras 7 sur lequel est articulée une bielle 10, qui forme avec le bras 7 un mécanisme 8 à genouillère. L'extrémité de la bielle 10 opposée à son articulation sur le bras 7 est liée à un câble 9 de transmission d'effort de serrage du frein, par tout moyen approprié. Cette liaison peut par exemple être réalisée comme représentée au moyen d'un palonnier 11 lié à la bielle 10 par une rotule terminale 12 de cette dernière. Le palonnier 11 est monté déplaçable en translation longitudinale dans des ouvertures 13 ménagées en vis-à-vis dans les parois 4a de la semelle 3, et comporte à sa partie inférieure une excroissance 11a (Fig.3) qui s'engage entre les parties des parois 4a délimitant les bords inférieurs des ouvertures 13, afin de permettre le guidage du coulissement du palonnier 11 dans la semelle 3. Le palonnier 11 s'étend de plus latéralement sous et entre les ailes 5 (Fig.3) qui complètent ainsi le guidage du palonnier 11 par les parois 4a. Une gorge 20 est ménagée sur la périphérie du palonnier 11 pour recevoir le câble 9, qui entoure ainsi sur trois côtés le palonnier 11 en formant deux brins 9a (Fig.2 et 3). Le palonnier 11 peut coulisser dans une direction parallèle au câble 9.

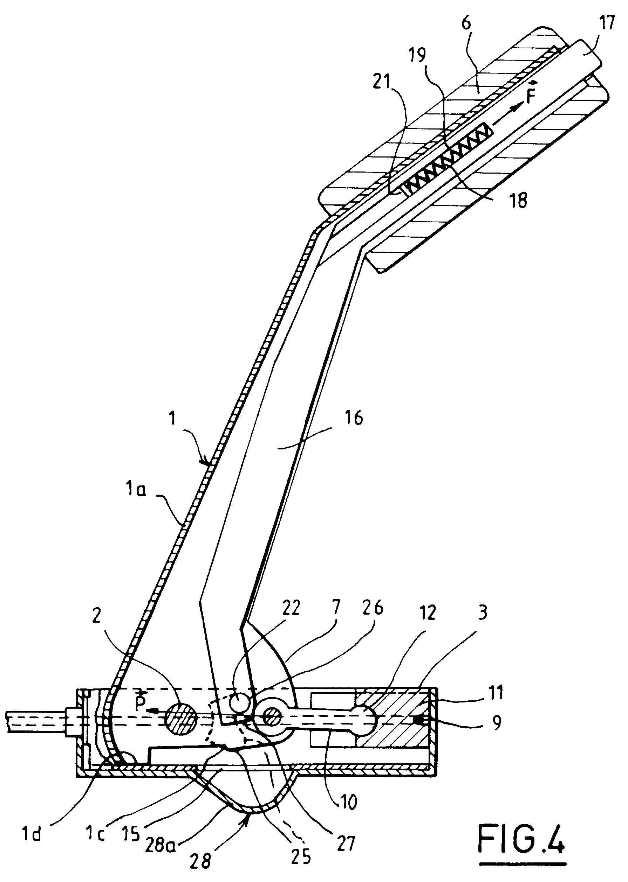

La position repos du levier 1 est déterminée par son profil de butée 1c formé à son extrémité opposée à la poignée 6, lorsque cette butée 1c est en contact avec le bord d'une ouverture 15 agencée dans le fond 4b du profilé 4. La position serrée du levier 1 est obtenue lorsqu'un second profil de butée 1d de ce levier, formé par un décrochement terminal proche de la bielle 10, vient en contact avec le fond 4b de la semelle 3 (Fig.4). Cette dernière est fixée au plancher du véhicule (non représenté) de telle sorte que les efforts de serrage et de manoeuvre soient repris par la structure du véhicule.

Les moyens de maintien et de verrouillage de sécurité du levier 1 dans la position de serrage comprennent un poussoir 16 déplaçable par translation à l'intérieur du levier 1, et comportant une partie terminale 17 coudée par rapport au reste du poussoir 16, et pouvant coulisser à l'intérieur de la poignée de préhension 6. Le poussoir 16 est équipé de moyens de rappel, qui dans l'exemple illustré sont constitués par un ressort 18 de compression, disposé dans un logement longitudinal 19 de la partie terminale 17 du poussoir 16, et dont l'extrémité la moins éloignée de la semelle 3 prend appui sur un élément 21 solidaire du levier 1. L'extrémité opposée du ressort 18 comprimé exerce sur le poussoir 16 une poussée F qui tend à maintenir le poussoir dans une position où l'extrémité de sa partie terminale 17 fait légèrement saillie de l'extrémité de la poignée 6.

Les moyens de verrouillage du levier 1 comprennent également deux ergots latéraux 22 formés sur l'extrémité 14 du poussoir 16, opposée à sa partie terminale 17. Ces ergots 22 sont engagés dans des lumières oblongues 23 ménagées en regard l'une de l'autre dans les parois la du levier 1, entre l'axe 2 et les ouvertures 13. De plus dans les parois 4a sont également agencées des ouvertures 24, plus particulièrement visibles à la Fig.5, dont les bords définissent chacun un profil de came, constitué d'un premier dégagement inférieur ou encoche 25 et d'un second dégagement supérieur ou encoche 26, séparé par un bec 27 du dégagement inférieur 25. Les ergots latéraux 22 sont engagés simultanément dans les lumières oblongues 23 et les ouvertures 24, soit en appui dans les dégagements inférieurs 25 lorsque le levier 1 est en position basse desserrée (Fig.1), soit dans les dégagements supérieurs 26 lorsque le levier 1 est en position serrée relevée (Fig.4), le passage d'une position à l'autre se faisant par appui glissant des ergots 22 sur le profil des dégagements 25, 26 et des rampes formées par les becs 27.

Le mécanisme à genouillère 8 fait saillie extérieurement au fond 4b de la semelle 3 par l'ouverture 15 ménagée à cet effet, lorsque le levier 1 est en position basse desserrée (Fig.1). Une coiffe 28, réalisée en une matière souple tel qu'un élastomère, enveloppe la semelle 3 et comporte un bossage 28a en regard de l'ouverture 15, afin de recouvrir la partie saillante du mécanisme à genouillère 8. Le câble 9 de serrage s'étend, à partir du palonnier 11, entre les parois 4a et les parois latérales de la coiffe 28 (Fig.2). Ce câble 9 (ou ces câbles) est(sont) enfilé(s) dans la coiffe 28 avant d'être monté(s) sur le palonnier 11. Le réglage en tension s'effectue soit au niveau du palonnier (ce qui sous-entend que le câble est en deux parties), soit sur une butée de gaine du câble 9 (cas du monocâble raccordé ou non de façon intermédiaire) soit encore sur une pièce de raccordement du câble 9, de manière connue et non représentée.

La manoeuvre du frein à main qui vient d'être décrit s'effectue de la manière suivante.

Le levier étant en position basse (Fig.1), le mécanisme à genouillère 8 fait saillie par l'ouverture 15 au fond de la semelle 3. Le profil de butée 1c est en appui sur le bord de l'ouverture 15 éloigné du palonnier 11, les ergots 22 sont positionnés en butée dans les dégagements inférieurs 25 des profils de came des ouvertures 24, et y sont maintenus par la poussée F développée sur le poussoir 16 par le ressort de rappel 18.

Lors d'une manoeuvre de serrage, le levier 1 est mis en rotation par rapport à la semelle 3 autour de son axe 2, afin de le relever jusqu'à ce que son profil de butée 1d soit amené en contact avec le fond 4b de la semelle 3 (Fig.4). Au cours de cette manoeuvre de serrage, les ergots 22 glissent sur les cames des ouvertures 24, depuis les encoches inférieures 25 sur les becs 27 et viennent se loger dans le fond des encoches supérieures 26. A ce déplacement correspond une translation du poussoir 16 à l'encontre de la force de rappel F du ressort 18 qui est donc momentanément comprimé, et qui se détend lorsque les ergots 22 pénètrent dans les dégagements supérieurs 26. Durant ce mouvement du poussoir 16, les ergots 22 subissent également une translation dans les lumières oblongues 23. En fin de manoeuvre de serrage, la contrainte élastique de rappel F pousse les ergots 22 dans les dégagements supérieurs 26 et les y maintient, assurant un verrouillage de sécurité du frein dans la position serrée.

Dans celle-ci comme dans la position desserrée, la partie terminale 17 du poussoir 16 fait légèrement saillie à l'extérieur de la poignée 6, de sorte que le déverrouillage de la sécurité du frein s'obtient sans avoir à soulager l'effort de contact entre le profil 1d et le fond 4b, en actionnant le poussoir 16 à l'aide du pouce au niveau de l'extrémité de sa partie terminale 17. Cet actionnement permet de faire coulisser le poussoir 16 à l'encontre du ressort 18 et ainsi de désengager les ergots 22 des dégagements supérieurs 26 des cames, autorisant le retour du levier 1 en position de repos après glissement des ergots 22 sur les becs 27, moyennant un effort limité sur le levier 1.

Il convient par ailleurs de noter que le mécanisme à genouillère 8 est dimensionné et positionné, par rapport à l'axe 2 de rotation du levier 1, de telle sorte que dans la position serrée du frein, le levier 1 étant relevé, le câble 9 transmet à la bielle 10, via le palonnier 11, une résultante d'effort P dirigée au-dessus de l'axe 2. De ce fait le couple résultant sur le levier 1 tend à maintenir ce dernier de façon stable dans sa position relevée de serrage, dans laquelle il est en contact avec le fond 4b de la semelle 3 par son profil de butée 1d.

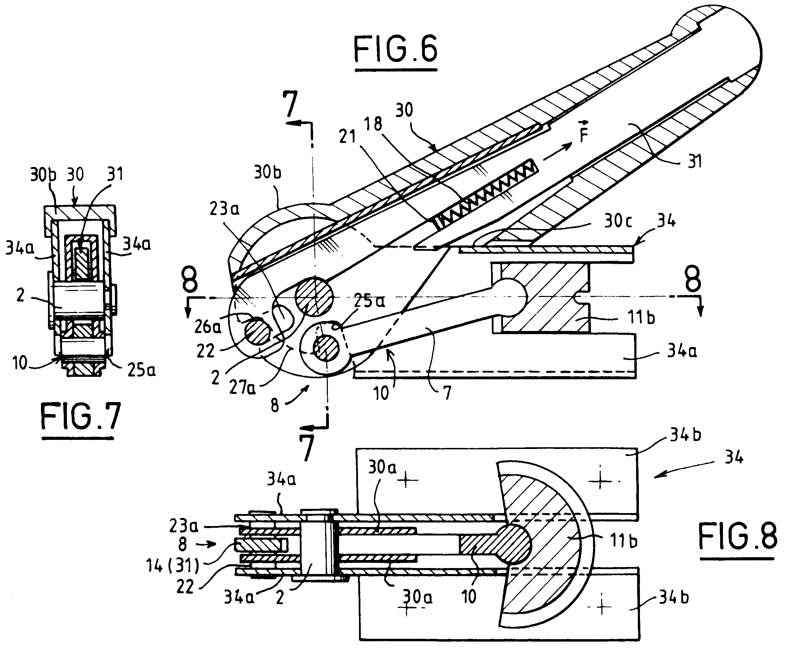

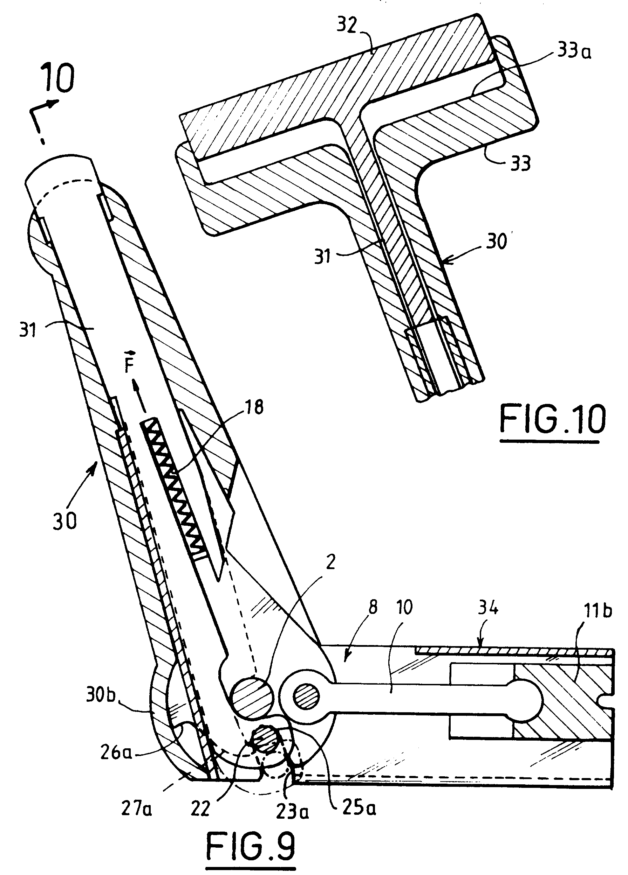

Le second mode de réalisation du frein de parc, illustré aux Fig.6 à 10, est plus compact que le précédent, du fait que le levier 30 ne comporte plus de poignée coudée mais est essentiellement rectiligne. Il est corrélativement muni d'un poussoir 31, coulissant dans un logement longitudinal du levier 30, et comportant une partie terminale transversale 32 qui s'étend sur toute la largeur de la poignée manuelle 33 de préhension du levier 30 (Fig.10) et peut coulisser dans un logement 33a de cette dernière. La partie terminale 32 fait saillie à l'extérieur de la poignée 33 lorsque le ressort 18 n'est pas comprimé, comme la partie terminale 17 de la réalisation précédente.

Par ailleurs dans cette forme d'exécution du frein, les profils de cames ne sont plus délimités par des ouvertures 24 comme dans la réalisation précédente, mais sont agencés directement sur les extrémités de la semelle 34. Ces cames sont ainsi constituées chacune par un premier dégagement 25a proche de la bielle 10, une rampe 27a plus éloignée de la bielle 10, et enfin par un décrochement 26a situé à l'extrémité des parois en U 34a de la semelle 34. De plus le frein selon ce mode de réalisation n'est plus équipé d'une coiffe, qui n'est pas nécessaire, car l'étanchéité des passages du câble est réalisée, de manière connue en soi et non représentée, par des pièces montées sur le plancher du véhicule.

On remarque également que les ailes longitudinales 34b de la semelle 34 sont interrompues avant l'axe 2 de rotation, et que le palonnier 11b est constitué sous la forme d'une pièce cylindrique. Des lumières oblongues 23a dans lesquelles sont engagés les ergots 22 du poussoir 31, sont formées sur les extrémités des parois 30a du levier 30, sur lesquelles est articulée la bielle 10.

La position repos du levier 30 est fixé sur un profil de butée 30c sur la semelle 34, ce profil 30c étant ménagé non plus à l'extrémité articulée du frein comme dans le cas précédent, mais dans une position intermédiaire, afin de pouvoir prendre appui sur les ailes 34b de la semelle 34 lorsque le frein est en position desserrée (Fig.6). En effet dans ce mode de réalisation la constitution du mécanisme à genouillère est telle qu'il n'est plus nécessaire de prévoir une ouverture de passage dans le fond de la semelle 34, lorsque le frein est en position de repos desserrée. De plus, en position desserrée, les ergots 22 sont situés à l'entrée des lumières oblongues 23a.

Par ailleurs, le verrouillage de sécurité du frein dans sa position serrée (Fig.9) est obtenu par engagement simultané des ergots 22 au fond des lumières allongées 23a et dans les dégagements 25a des cames, ces dégagements étant à cet effet convenablement orientés de façon à s'étendre dans une direction qui forme un angle obtus avec le fond de la semelle 34. Cette direction est également celle de la poussée de rappel F exercée par le ressort 18 sur le poussoir 31, de sorte qu'en position serrée le levier 30 forme un angle obtus avec le fond de la semelle 34 et avec la bielle 10 (Fig.9).

Pour desserrer le frein, il suffit à l'utilisateur de prendre la poignée 33 et d'appuyer avec la paume de la main ou avec le pouce sur la partie terminale 32, contre la force du ressort de rappel 18, afin de faire sortir les ergots 22 des encoches 25a de la came. Une fois cette opération effectuée, les ergots peuvent alors librement glisser sur les rampes 27a et venir se placer en butée dans les dégagements 26a, lorsque le levier 30 est complètement abaissé (Fig.6).

La tension disponible dans le ou les câbles de transmission 9 peut être ajustée à la valeur voulue en jouant sur le dimensionnement des pièces constitutives (longueur de la bielle, du bras, angle de débattement du levier admis..). La course peut être rendue ajustable en permettant un réglage en longueur du bras 6 et/ou de la bielle 10.

Le mécanisme à genouillère 8 du frein ne nécessite pour la manoeuvre de celui-ci qu'un effort limité de la part de l'utilisateur, inférieur à 15 daN environ au niveau du levier, pour obtenir la tension maximale adéquate dans le ou les câbles. Un autre avantage du frein selon l'invention réside dans le fait que la manoeuvre du poussoir 16 ou 31 de verrouillage de sécurité ne nécessite pas un effort supplémentaire de soulagement du frein. En effet, le maintien en position serrée est assuré par le choix de la direction d'effort P dans la bielle 10, de telle sorte que cet effort garantisse un couple suffisant pour maintenir en position haute le levier, en butée sur la semelle. Si le levier en position haute est en butée sur la semelle, l'effort présent dans le mécanisme de verrouillage, frein serré, est nul. Si on utilise les ergots 22 pour assurer l'arrêt du levier 1, 30 par rapport à la semelle 3, 34, l'effort reste très faible, la bielle 10 siège de l'effort P étant au voisinage de son point mort haut.

L'invention est susceptible de recevoir de nombreuses variantes de réalisation.

## Revendications

1. Frein de parc pour véhicule, comprenant un levier (1; 30) articulé sur une semelle (3; 34), relié à un câble (9) de transmission d'effort de serrage, et des moyens de maintien et de verrouillage du levier dans une position angulaire de serrage déterminée, caractérisé en ce que lesdits moyens de maintien et de verrouillage comprennent un mécanisme à genouillère (8), lié d'une part à l'extrémité articulée du levier et d'autre part au câble (9) de transmission d'effort.

2. Frein selon la revendication 1, caractérisé en ce que le mécanisme à genouillère (8) comporte un bras (7) solidaire de l'extrémité du levier (1) articulée sur la semelle (3), et une bielle (10) articulée sur le bras et fixée à l'extrémité du câble (9) de transmission d'effort, et cette bielle est liée à un palonnier (11) déplaçable en translation à l'intérieur de la semelle (3).

3. Frein selon la revendication 1, caractérisé en ce que le mécanisme à genouillère (8) est dimensionné et positionné, par rapport à l'axe (2) de rotation du levier (1; 30), de telle sorte que dans la position serrée du frein, le levier étant relevé, le câble (9) transmet à la bielle (10), via le palonnier (11), une résultante d'effort (P) dirigée au-dessus de l'axe (2), de manière que le couple résultant sur le levier (1) tende à maintenir ce dernier dans sa position relevée de serrage, en butée sur la semelle (3; 34).

4. Frein selon l'une des revendications 1 à 3, caractérisé en ce que lesdits moyens de maintien et de verrouillage du levier (1) comprennent un poussoir (16) déplaçable en translation à l'intérieur du levier, dont une première extrémité (17) fait saillie d'une poignée (6) de préhension du levier et dont la seconde extrémité (14) est munie d'ergots latéraux (22) engagés dans des lumières oblongues (23) ménagées dans des parois latérales (1a) du levier, et la semelle (3) comporte des parois (4a) s'étendant de chaque côté de l'extrémité articulée du levier et dans lesquelles sont agencés des profils de came (25, 26, 27) sur lesquels les ergots s'appuient et peuvent glisser durant les manoeuvres du levier.

5. Frein selon la revendication 4, caractérisé en ce que les profils de came (25, 26, 27) comportent un premier dégagement (25) dans lequel sont engagés les ergots (22) lorsque le levier (1) est en position basse desserrée, un bec (27), et un second dégagement (26) dans lequel sont introduits les ergots lorsque le levier est en position haute serrée, des moyens (18) étant en outre prévus pour rappeler élastiquement le poussoir (16) dans sa position initiale et maintenir les ergots au fond de l'un ou l'autre des dégagements (25, 26) de la came.

6. Frein selon la revendication 5, caractérisé en ce que les moyens de rappel du poussoir (15; 34) comprennent un ressort de compression (18) disposé à l'intérieur d'une partie terminale (17) du poussoir, intérieure à la poignée (6; 33) du levier (1; 30), dont une extrémité prend appui sur un élément (21) solidaire du levier, tandis que l'autre extrémité exerce sur la partie terminale et le poussoir une force de rappel (F) dirigée dans le sens qui tend à maintenir les ergots (22) du poussoir au fond des dégagements de repos (25; 26a) ou de serrage (26; 25a) du levier (1; 30) selon la position de ce dernier, le déverrouillage du levier pouvant être obtenu par préhension de la poignée et poussée manuelle simultanée sur la partie terminale du poussoir.

7. Frein selon l'une des revendications 5 et 6, caractérisé en ce que les profils de came (25, 26, 27) sont réalisés dans des ouvertures (24) ménagées dans les parois latérales (4a) en U de la semelle (3).

8. Frein selon l'une des revendications 5 et 6, caractérisé en ce que les profils de came (25a, 26a, 27a) sont ménagés sur les extrémités des parois latérales (34) de la semelle (34), les dégagements (25a, 26a) formés aux extrémités des cames étant reliés par une rampe (27a) de glissement pour les ergots (22) de l'extrémité (14) du poussoir (16; 31).

9. Frein selon la revendication 8, caractérisé en ce que le levier (30) étant creux, les lumières oblongues (23a) sont formées à partir des extrémités des parois (30a) du levier.

## Claims

1. Parking brake for a vehicle, comprising a lever (1; 30) articulated on a base (3; 34) and connected to a cable (9) for transmitting gripping force, and means for maintaining and locking the lever in a predetermined angular locking position, characterised in that the said maintaining and locking means comprise a knuckle mechanism (8) connected on the one hand to the articulated end of the lever and on the other hand to the force transmitting cable (9).

2. Brake as claimed in Claim 1, characterised in that the knuckle mechanism (8) has an arm (7) which is integral with the end of the lever (1) articulated on the base (3), and a connecting rod (10) articulated on the arm and fixed to the end of the force transmitting cable (9), and this connecting rod is connection to a compensator (11) which is displaceable in translation in the interior of the base (3).

3. Brake as claimed in Claim 1, characterised in that the knuckle mechanism (8) is dimensioned and positioned, with respect to the spindle (2) about which the lever (1; 30) rotates, in such a way that in the locked position of the brake, the lever being raised, the cable (9) transmits to the connecting rod (10) via the compensator (11) a resultant force (P) which is directed above the spindle (2) in such a way that the torque resulting on the lever (1) tends to maintain the latter in its raised locking position butted against the base (3; 34).

4. Brake as claimed in one of Claims 1 to 3, characterised in that the said means for maintaining and locking the lever (1) comprise a pusher (16) which is displaceable in translation in the interior of the lever, of which a first end (17) projects from a handle (6) for gripping the lever and the second end (14) is equipped with lateral lugs (22) engaged in oblong openings (23) provided in lateral walls (1a) of the lever, and the base (3) has walls (4a) which extend on either side of the articulated end of the lever end in which cam profiles (25, 26, 27) are produced on which the lugs rest and can slide during the manoeuvres of the lever.

5. Brake as claimed in Claim 4, characterised in that the cam profiles (25, 26, 27) have a first cut-out (25) in which the lugs (22) are engaged when the lever (1) is in the lower unlocked position, a nose (27), and a second cut-out (26) into which the lugs are introduced when the lever is in the upper locked position, means (18) being additionally provided for resiliently returning the pusher (16) to its initial position and maintaining the lugs at the end of one or the other of the cut-outs (25, 26) of the cam.

6. Brake as claimed in Claim 5, characterised in that the means for returning the pusher (15; 34) comprise a compression spring (18) disposed in the interior of an end part (17) of the pusher, inside the handle (6; 33) of the lever (1; 30), of which one end rests on an element (21) which is integral with the lever whilst the other end exerts on the end part and the pusher a restoring force (F) which is directed in the direction which tends to maintain the lugs (22) of the pusher at the end of the cut-outs for resting (25; 26a) or locking (26: 25a) of the lever (1; 30) according to the position of the latter, the lever being capable of being unlocked by gripping of the handle and simultaneous manual pressure on the end part of the pusher.

7. Brake as claimed in one of Claims 5 and 6, characterised in that the cam profiles (25, 26, 27) are produced in openings (24) made in the lateral walls (4a) of the base which form a U shape.

8. Brake as claimed in one of Claims 5 and 6, characterised in that the cam profiles (25a, 26a, 27a) are produced on the ends of the lateral walls (34) of the base (34), the cut-outs (25a, 26a) formed at the ends of the cams being connected by a ramp (27a) permitting sliding of the lugs (22) of the end (14) of the pusher (16; 31).

9. Brake as claimed in Claim 8, characterised in that since the lever (30) is hollow the oblong openings (23a) are formed from the ends of the walls (30a) of the lever.

## Patentansprüche

1. Feststellbremse für Kraftfahrzeug, mit einem Hebel (1; 30), der an einem Aufnahmesitz (3; 34) angelenkt ist und mit einem Spannkraft-Übertragungsseii (9) verbunden ist, sowie mit Mitteln zum Halten und Verriegeln des Hebels in einer bestimmten Spann-Winkelstellung, dadurch gekennzeichnet, daß die Halte- und Verriegelungsmittel einen Kniehebelmechanismus (8) enthalten, der einerseits mit dem angelenkten Ende des Hebels und andererseits mit dem Kraftübertragungsseil (9) verbunden ist.

2. Bremse nach Anspruch 1, dadurch gekennzeichnet, daß der Kniehebelmechanismus (8) einen Arm (7), der an dem am Aufnahmesitz (3) angelenkten Ende des Hebels (1) befestigt ist, sowie eine Pleuelstange (10) enthält, die am Arm angelenkt und am Ende des Kraftübertragungsseils (9) befestigt ist, wobei diese Pleuelstange mit einem Träger (11) verbunden ist, der in Aufnahmesitz (3) in Verschiebungsrichtung beweglich ist.

3. Bremse nach Anspruch 1, dadurch gekennzeichnet, daß der Kniehebelmechanismus (8) in bezug auf die Schwenkachse (2) des Hebels (1; 30) in der Weise dimensioniert und positioniert ist, daß in der Feststellposition der Bremse bei angehobenem Hebel das Seil (9) über den Träger (11) an die Pleuelstange (10) eine Kraftresultierende (P) überträgt, die oberhalb der Achse (2) verläuft, so daß das auf den Hebel (1) wirkende resultierende Kräftepaar bestrebt ist, diesen letzteren in seiner angehobenen Feststellposition am Aufnahmesitz (3; 34) in Anschlag zu halten.

4. Bremse nach einem der Ansprüche 1 bis 3, dadurch gekennzeichnet, daß die Mittel zum Halten und Verriegeln des Hebels (1) eine Schubstange (16) enthalten, die in Verschiebungsrichtung innerhalb des Hebels verschiebbar ist und wovon ein erstes Ende (17) von einem Griff (6) des Hebels vorsteht und wovon das zweite Ende (14) mit seitlichen Vorsprüngen (22) versehen ist, die in Langlöcher (23) eingreifen, die in den Seitenwänden (1a) des Hebels ausgespart sind, wobei der Aufnahmesitz (3) Wände (4a) enthält, die sich beiderseits des angelenkten Endes des Hebels erstrecken und in denen Nockenprofile (25, 26, 27) angeordnet sind, auf denen sich die Vorsprünge abstützen und während der Betätigungen des Hebels gleiten können.

5. Bremse nach Anspruch 4, dadurch gekennzeichnet, daß die Nockenprofile (25, 26, 27) eine erste Aussparung (25), in der die Vorsprünge (22) in Eingriff sind, wenn sich der Hebel in der unteren, entspannten Position befindet, eine Nase (27) und eine zweite Aussparung (26) umfassen, in die die Vorsprünge geführt werden, wenn sich der Hebel in der oberen, gespannten Position befindet, wobei außerdem Mittel (18) vorgesehen sind, um die Schubstange (16) elastisch in ihre Anfangsposition zurückzustellen und um die Vorsprünge elastisch auf dem Boden der einen oder der anderen der Aussparungen (25, 26) des Nockens zu halten.

6. Bremse nach Anspruch 5, dadurch gekennzeichnet, daß die Mittel für die Rückstellung der Schubstange (15; 34) eine Kompressionsfeder (18) enthalten, die in einem Endabschnitt (17) der Schubstange innerhalb des Griffs (6; 33) des Hebels (1; 30) angeordnet ist, wovon sich ein Ende auf einem mit dem Hebel verbundenen Element (21) abstutzt, während das andere Ende auf den Endabschnitt und auf die Schubstange eine Rückstellkraft (F) ausübt, die in die Richtung weist, in der die Vorsprünge (22) der Schubstange je nach Stellung des Hebels (1; 30) auf dem Boden der Ruhestellungs-Aussparungen (25; 26a) oder auf dem Boden der Spann-Aussparungen (26; 25a) des Hebels (1; 30) gehalten werden, wobei die Entriegelung des Hebels durch Ergreifen des Griffs und durch gleichzeitiges manuelles Drücken auf den Endabschnitt der Schubstange erhalten wird.

7. Bremse nach einem der Ansprüche 5 und 6, dadurch gekennzeichnet, daß die Nockenprofile (25, 26, 27) in Öffnungen (24) verwirklicht sind, die in den U-förmigen Seitenwänden (4a) des Aufnahmesitzes (3) ausgespart sind.

8. Bremse nach einem der Ansprüche 5 und 6, dadurch gekennzeichnet, daß die Nockenprofile (25a, 26a, 27a) in den Enden der Seitenwände (34) des Aufnahmesitzes (34) ausgebildet sind, wobei die in den Enden der Nocken ausgebildeten Aussparungen (25a, 26a) über eine Gleitrampe (27a) für die Vorsprünge (22) des Endes (14) der Schubstange (16; 31) verbunden sind.

9. Bremse nach Anspruch 8, dadurch gekennzeichnet, daß die Langlöcher (23a) dann, wenn der Hebel (30) hohl ist, beginnend bei den Enden der Wände (30a) des Hebels gebildet sind.
